# EUROPEAN PATENT SPECIFICATION

(11) **EP 3 488 630 B1**
(45) Date of publication and mention of the grant of the patent: **03.07.2024**
(21) Application number: 17831455.5
(22) Date of filing: 27.01.2017
(51) Int. Cl.: H04W 76/16, H04W 28/02, H04W 72/51, H04W 24/10, H04W 72/0453, H04W 88/06, H04W 88/08

(54) **LWA ENHANCEMENTS FOR TRI-BAND (2.4 GHZ, 5 GHZ, AND 60 GHZ) WI-FI EQUIPMENT**
LWA-ERWEITERUNGEN FÜR WIFI-AUSRÜSTUNG MIT DREIFACHBAND (2,4 GHZ, 5 GHZ UND 60 GHZ)
AMÉLIORATIONS DE LWA POUR ÉQUIPEMENT WI-FI À TROIS BANDES (2,4 GHZ, 5 GHZ ET 60 GHZ)

(30) Priority: 20.07.2016 US 201662364707 P
(43) Date of publication of application: 29.05.2019
(73) Proprietor: Apple Inc., Cupertino, CA 95014 (US)
(72) Inventor: SIROTKIN, Alexander, 49527 Tel-Aviv (IL); HAREUVENI, Ofer, 26302 Haifa (IL); PARRON, Jerome, 90762 Fuerth / BY (DE); PHUYAL, Umesh, San Diego, California 92128 (US); ISKANDER, Shadi, 84030 Ergolding (DE); YIU, Candy, Portland, Oregon 97201 (US); HIMAYAT, Nageen, Fremont, California 94539 (US)
(74) Representative: Wardle, Callum Tarn
(86) International application number: PCT/US2017/015362
(87) International publication number: WO 2018/017161

(56) References cited:
- US-A1- 2015 264 738
- US-A1- 2016 128 110
- RICHARD BURBIDGE (INTEL CORPORATION): "Liaison from 3GPP on LWA and LWIP ; 11-16-0351-01-0000-liaison-from-3gpp-on-lw a-and-lwip", IEEE DRAFT; 11-16-0351-01-0000-LIAISON-FROM-3GPP-ON-LW A-AND-LWIP, IEEE-SA MENTOR, PISCATAWAY, NJ USA, vol. 802.11, no. 1, 14 March 2016 (2016-03-14), pages 1-25, XP068105227, [retrieved on 2016-03-14]
- INTEL CORPORATION: "Control plane aspects of 60GHz support for LWA", 3GPP DRAFT; R3-160629-ELWA_C-PLANE_60GHZ_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India; 20160411 - 20160415 2 April 2016 (2016-04-02), XP051083000, Retrieved from the Internet: URL:http://www.3gpp.org/ftp/tsg_ran/WG3_Iu /TSGR3_91bis/Docs/ [retrieved on 2016-04-02]
- CATT: "Discussion on CP Aspect to Support 60GHz WLAN", 3GPP DRAFT; R2-163378 DISCUSSION OF SUPPORT OF 60GHZ WLAN CP ASPECT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Nanjing, China; 20160523 - 20160527 22 May 2016 (2016-05-22), XP051104908, Retrieved from the Internet: URL:http://www.3gpp.org/ftp/Meetings_3GPP_ SYNC/RAN2/Docs/ [retrieved on 2016-05-22]
- INTEL CORPORATION ET AL: "60 GHz support in eLWA", 3GPP DRAFT; [5] R2-163565-ELWA_60GHZ_V9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051104598, Retrieved from the Internet: URL:http://www.3gpp.org/ftp/Meetings_3GPP_ SYNC/RAN2/Docs/ [retrieved on 2016-05-22]
- QUALCOMM INCORPORATED: "Introduction of LTE-WLAN Aggregation", 3GPP DRAFT; 36331_CR2008R3_(REL-13)_R2-162042, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20160215 - 20160219 16 March 2016 (2016-03-16), XP051081710, Retrieved from the Internet: URL:http://www.3gpp.org/ftp/tsg_ran/WG2_RL 2/Specifications/201603_draft_specs_after_ RAN_71/History/ [retrieved on 2016-03-16]
- "3rd Generation Partnership Project; Technical Specification Group Radio Access Network; Evolved Universal Terrestrial Radio Access Network (E- UTRAN) and Wireless LAN (WLAN); Xw application protocol (XwAP) (Release 13)", 3GPP STANDARD ; TECHNICAL SPECIFICATION ; 3GPP TS 36.463, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V13.1.0, 1 July 2016 (2016-07-01), pages 1-94, XP051295307, [retrieved on 2016-07-01]
- RICHARD BURBIDGE: 'Liaison from 3GPP on LWA and LWIP' IEEE 802.11-16/351R0, [Online] 13 March 2016, XP068105226 Retrieved from the Internet: <URL:http://www.eee 802.org/secmai l/msgl9958.html>
- QUALCOMM INCORPORATED ET AL.: 'Control Plane Architecture for LTE-WLAN Aggregation' R2-152738, 3GPP TSG-RAN WG2 MEETING #90, [Online] 16 May 2016, FUKUOKA, JAPAN, XP050972952 Retrieved from the Internet: <URL:http://www.3gpp.org/ftp/tsg_ran/WG2_RL 2/TSGR2_90/Docs>
- INTERDIGITAL COMMUNICATIONS ET AL.: 'Bearer Architecture for LTE+WLAN Aggregation in LTE R13' R2-152566, 3GPP TSG-RAN WG2 MEETING #90, [Online] 15 May 2015, FUKUOKA, JAPAN, XP050971563 Retrieved from the Internet: <URL:http://www.3gpp.org/ftp/tsg_ran/WG2_RL 2/TSGR2_90/Docs>

## Description

### TECHNICAL FIELD

Embodiments pertain to radio access networks. Some embodiments relate to Third Generation Partnership Project Long Term Evolution (3GPP LTE) networks and LTE advanced (LTE-A) networks as well as 4^{th} generation (4G) networks and 5^{tn} generation (5G) networks. Some embodiments relate to Long Term Evolution (LTE)/Wireless Local Area Network (WLAN) Aggregation (LWA) techniques for tri-band (2.4 GHz, 5 GHz, and 60 GHz) Wi-Fi equipment.

### BACKGROUND

LTE and LTE-advanced are standards for wireless communication of high-speed data for user equipment (UE) such as mobile telephones. In LTE-advanced and various wireless systems, carrier aggregation is a technology used by LTE-advanced where multiple carrier signals operating on different frequencies may be used to carry communications for a single UE, thus increasing the bandwidth available to a single device. Carrier aggregation cannot be deployed in non-collocated scenarios with non-ideal backhaul, where Dual Connectivity is normally used, aggregation two links at higher protocol layers. DC is a technology used in some communication systems where one or more links operate on unlicensed frequencies, and in some such embodiments, other communication technologies and devices such as wireless local area network (WLAN) access points (APs) may be combined with LTE evolved node B (eNB) infrastructure to provide increased bandwidth to user devices.

IEEE DRAFT "Liaison from 3GPP on LWA and LWIP" (XP068105227) describes LTE-WLAN Aggregation (LWA) and LTE WLAN Radio Level Integration with IPsec Tunnel (LWIP).

3GPP DRAFT R3-160629 (XP05108300°) describes control plane aspects of 60GHz support for LWA.

3GPP DRAFT R2-163378 (XP051104908) describes CP aspect to support 60GHz WLAN.

3GPP DRAFT R2-163565 (XP051104598) describes 60GHz support in eLWA.

3GPP DRAFT R2-162042 (XP051081710) describes the introduction of LTE-WLAN Aggregation.

3GPP TS 36.463 V13.1.0 (XP051295307) describes the signalling procedures of the control plane between an eNB and WLAN Termination.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1A is a functional diagram of a wireless network in accordance with the disclosure.
FIG. IB is a block diagram of a system that may be used for enhanced Long Term Evolution (LTE)/Wireless Local Area Network (WLAN) Aggregation (eLWA) as described herein.
FIG. 2 is a block diagram of a User Equipment (UE) in accordance with some embodiments.
FIG. 3 is a block diagram of an Evolved Node-B (eNB) in accordance with some embodiments.
FIG. 4 is a diagram illustrating communication between eNB, UE 20 and access point (AP) for activating LWA in accordance with the disclosure.
FIG. 5 is another diagram illustrating communication between eNB, UE and access point (AP) for activating LWA in accordance with the disclosure.
FIG. 6 illustrates LWA communication to a UE with and without the use of fast session transfer (FST) in accordance with the disclosure.
FIG. 7 is a flow diagram illustrating example functionalities for communicating information using LWA, in accordance with the disclosure.
FIG. 8 illustrates a block diagram of a communication device such as an eNB, a UE, or an AP, in accordance with the disclosure.

### DETAILED DESCRIPTION OF THE INVENTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

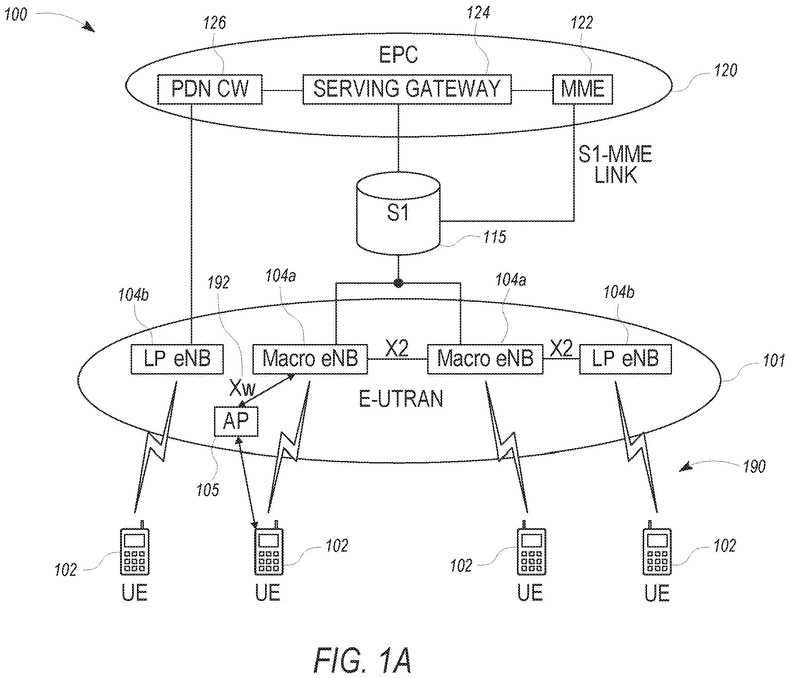

FIG. 1A shows an example of a portion of an end-to-end network architecture of a Long Term Evolution (LTE) network with various components of the network in accordance with the disclosure. As used herein, an LTE network refers to both LTE and LTE Advanced (LTE-A) networks as well as other versions of LTE networks to be developed. The network 100 may comprise a radio access network (RAN) (e.g., as depicted, the E-UTRAN or evolved universal terrestrial radio access network) 101 and core network 120 (e.g., shown as an evolved packet core (EPC)) coupled together through an SI interface 115. For convenience and brevity, only a portion of the core network 120, as well as the RAN 101, is shown in the example.

The core network 120 may include a mobility management entity (MME) 122, serving gateway (serving GW) 124, and packet data network gateway (PDN GW) 126. The RAN 101 may include evolved Node-B s (eNBs) 104 (which may operate as base stations) for communicating with user equipment (UE) 102 via an air interface 190. The eNBs 104 may include macro eNBs 104a and low power (LP) eNBs 104b. The eNBs 104 and UEs 102 may employ the LWA techniques as described herein.

The MME 122 may be similar in function to the control plane of legacy Serving GPRS Support. Nodes (SGSN). The MME 122 may manage mobility aspects in access such as gateway selection and tracking area list management. The serving GW 124 may terminate the interface toward the RAN 101, and route data packets between the RAN 101 and the core network 120. In addition, the serving GW 124 may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or in separate physical nodes.

The PDN GW 126 may terminate a SGi interface toward the packet data network (PDN). The PDN GW 126 may route data packets between the EPC 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the serving GW 124 may be implemented in a single physical node or separate physical nodes.

The eNBs 104 (macro and micro) may terminate the air interface protocol and may be the first point of contact for a UE 102. In some embodiments, an eNB 104 may fulfill various logical functions for the RAN 101 including, but not limited to, RNC (radio network controller functions) such as radio bearer management, uplink and downlink dynamic radio resource management and data packet scheduling, and mobility management. In accordance with embodiments, UEs 102 may be configured to communicate orthogonal frequency division multiplexed (OFDM) communication signals with an eNB 104 over a multicarrier communication channel in accordance with an OFDM A communication technique. The OFDM signals may comprise a plurality of orthogonal subcarriers.

The SI interface 115 may be the interface that separates the RAN 101 and the EPC 120. It may be split into two parts: the Sl-U, which may carp traffic data between the eNBs 104 and the serving GW 124, and the SI-MME, which may be a signaling interface between the eNBs 104 and the MME 122. The X2 interface may be the interface between the eNBs 104. The X2 interface may comprise two parts, the X2-C and X2-U. The X2-C may be the control plane interface between the eNBs 104, while the X2-U may be the user plane interface between the eNBs 104.

With cellular networks, LP cells 104b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB since it is coupled through the PDN GW 126. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality. Thus, LP eNB may be implemented with a picocell eNB since it may be coupled to a macro eNB 104a via an X2 interface. Picocell eNBs or other LP eNBs LP eNB 104b may incorporate some or all functionality of a macro eNB LP eNB 104a. In some cases, this may be referred to as an access point base station or enterprise femtocell.

In some embodiments, the UE 102 may communicate with an access point (AP) 105. The AP 105 may use only the unlicensed spectrum (e.g., Wi-Fi bands, such as 2.4 GHz or 5 GHz) to communicate with the UE 102. The AP 105 may communicate with the macro eNB 104a (or LP eNB 104b) through an Xw interface 192 and through a WLAN termination (WT) (not illustrated in FIG. 1 A). In some embodiments, the AP 105 may communicate with the UE 102 independent of communication between the UE 102 and the macro eNB 104a. In other embodiments, the AP 105 may be controlled by the macro eNB 104a and use LWA, as described in more detail below. In yet other embodiments, the UE 102, the AP 105 and the eNB 104 can communicate using enhanced LWA (eLWA), where LTE data traffic can be aggregated with one or more Wi-Fi bands, such as 2.4 GHz, 5 GHz, or 60 GHz. Additionally, fast session transfer (FST) is enabled between the AP 105 and UE 102 when the AP and the UE support concurrent communication on more than one Wi-Fi band.

In an example, multiple access points (APs) may be connected to an access controller (AC), which in turn may communicate with a WT, and the WT may communicate with the eNB. In an example, the AC may be co-located (and be part of), e.g., the WT and/or the AP.

Communication over an LTE network may be split up into 10ms frames, each of which may contain ten 1ms subframes. Each subframe of the frame, in turn, may contain two slots of 0.5ms. Each subframe may be used for uplink (UL) communications from the UE to the eNB or downlink (DL) communications from the eNB to the UE. In one embodiment, the eNB may allocate a greater number of DL communications than UL communications in a particular frame. The eNB may schedule transmissions over a variety of frequency bands (f₁ and f₂). The allocation of resources in subframes used in one frequency band and may differ from those in another frequency band. Each slot of the subframe may contain 6-7 OFDM symbols, depending on the system used. In one embodiment, the subframe may contain 12 subcarriers. A downlink resource grid may be used for downlink transmissions from an eNB to a UE, while an uplink resource grid may be used for uplink transmissions from a UE to an eNB or from a UE to another UE. The resource grid may be a timefrequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A resource block may be 180 kHz wide in frequency and 1 slot long in time. In frequency, resource blocks may be either 12 x 15 kHz subcarriers or 24 x 7.5 kHz subcarriers wide. For most channels and signals, 12 subcarriers may be used per resource block, dependent on the system bandwidth. In Frequency Division Duplexed (FDD) mode, both the uplink and downlink frames may be 10ms and frequency (full-duplex) or time (half-duplex) separated. In Time Division Duplexed (TDD), the uplink and downlink subframes may be transmitted on the same frequency and are multiplexed in the time domain. The duration of the resource grid in the time domain corresponds to one subframe or two resource blocks. Each resource grid may comprise 12 (subcarriers) * 14 (symbols) =168 resource elements.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different physical downlink channels that are conveyed using such resource blocks, including the physical downlink control channel (PDCCH) and the physical downlink shared channel (PDSCH). Each subframe may be partitioned into the PDCCH and the PDSCH. The PDCCH may normally occupy the first two symbols of each subframe and carries, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary' Identifier (RNTI) that identifies the target UE for which the PDSCH is intended. Use of the UE-specific RNTI may limit decoding of the DCI format (and hence the corresponding PDSCH) to only the intended UE.

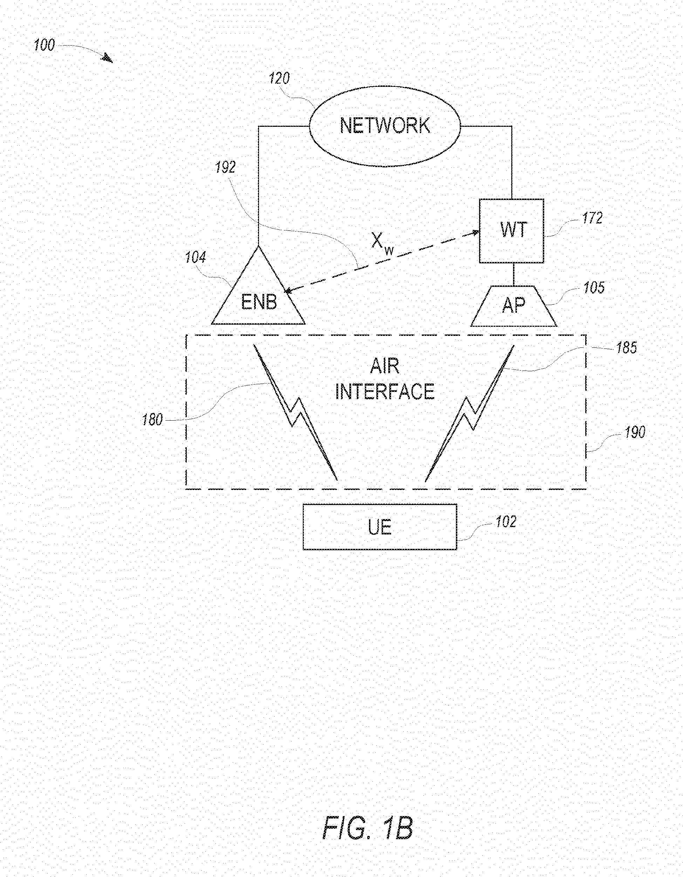

FIG. 1B is a block diagram of a system that may be used for enhanced Long Term Evolution (LTE)/Wireless Local Area Network (WLAN) Aggregation (eLW A) as described herein. More specifically, FIG. IB illustrates wireless communications between eNB 104 and UE 102 across air interface 190. In various embodiments, eNB 104 and UE 102 communicate using licensed frequencies that an operator of eNB 104 has exclusive access to, using standardized communications under LTE, LTE-Advanced, or related standardized communications. The UE 102 may also communicate with access point (AP) 105 via air interface 190, but using different unlicensed frequencies, such as 2.4 GHz, 5 GHz, or 60 GHz.

In some examples, LWA is structured to operate as an addition to an LTE system where eNB 104 is a primary initial interface for UE 102 to network 120, and where the LWA connections with AP 105 are managed via initial communications and connections established between eNB 104 and UE 102. Thus, in contrast to systems where an eNB 104 operates LTE communications in unlicensed bands with listen-before-talk as part of license assisted access (LAA) or LTE-unlicensed (LTE-U) operations to coexist with WLAN AP communications, LWA allows standardized communications using, for example, Institute of Electronic and Electrical Engineers (IEEE) 802.11 standards (e.g. "Wi-Fi") on unlicensed frequency bands with third generation partnership (3GPP) standard LTE communications operating the licensed bands, with the two technologies combined at the UE 102 and using an Xw connection 192 between the eNB 104 and the AP 105 or a WLAN termination (WT) node 172 of the AP 105. This enables simple upgrades to existing LTE, WLAN, or related infrastructure. The WLAN AP 105 and the eNB 104 may each continue to provide separate access to appropriate devices, but may also provide a combined service that provides the benefit of existing LTE or LTE-Advanced infrastructure to WLAN AP providers such as a provider operating WLAN AP 105 as well as providing increased bandwidth to operators of a cellular network that includes eNB 104.

FIG. 1B illustrates a wireless network 100 detailing aspects of UE 102 and eNB 104 connected via an air interface 190. UE 102 and eNB 104 communicate using a system that supports carrier aggregation, such that air interface 190 supports multiple frequency carriers, shown as component carrier 180 and component carrier 185. Although two component carriers are illustrated, various embodiments may include any number of two or more component carriers.

Long term evolution (LTE) cellular communications historically operate with a centrally managed system designed to operate in a licensed spectrum for efficient resource usage. By contrast, systems operating in unlicensed bands do not have such a centrally managed system, and are structured to coexist with other devices that may contend for the unlicensed bands. Wi-Fi systems provide for a first-come first-served operation where a device listens to a channel to see if it is in use before transmitting on the channel. Operating with such centrally managed use within unlicensed channels where systems not centrally controlled that use different channel access mechanisms than legacy LTE may be present carries significant risk of direct interference. LWA deals with this interference by splitting the management of the licensed and unlicensed bands as mentioned above.

In wireless network 100, the UE 102 and any other UEs in the system may be, for example, laptop computers, smartphones, tablet computers, printers, machine-type devices such as smart meters or specialized devices for healthcare monitoring, remote security surveillance, an intelligent transportation system, or any other wireless devices with or without a user interface. The eNB 104 provides the UE 101 network connectivity to a broader network 120. This UE 102 connectivity is provided via the air interface 190 in an eNB service area provided by the eNB 104. In some embodiments, such a broader network may be a wide area network operated by a cellular network provider, or may be the Internet. Each eNB service area associated with the eNB 104 is supported by antennas integrated with the eNB 104.

The XW connection 192 between eNB 104 and WT 172 and the air interface 190 between the eNB 104 and UE 102 enable LWA communications in some embodiments.

Xw192 can be an interface to coordinate communications between eNB 104 and WLAN AP 105. In an example, the Xw 192 interface does not connect eNB 104 directly to AP 105, but terminates at WT 172 (as seen in FIG. 1B). Details of the Xw 192 interface for some embodiments are defined by 3GPP standard release 13 (TS 36.461, 36.462, 3.463, 36.464 and 36.466.) In other embodiments, other interfaces may be used for managing such a connection.

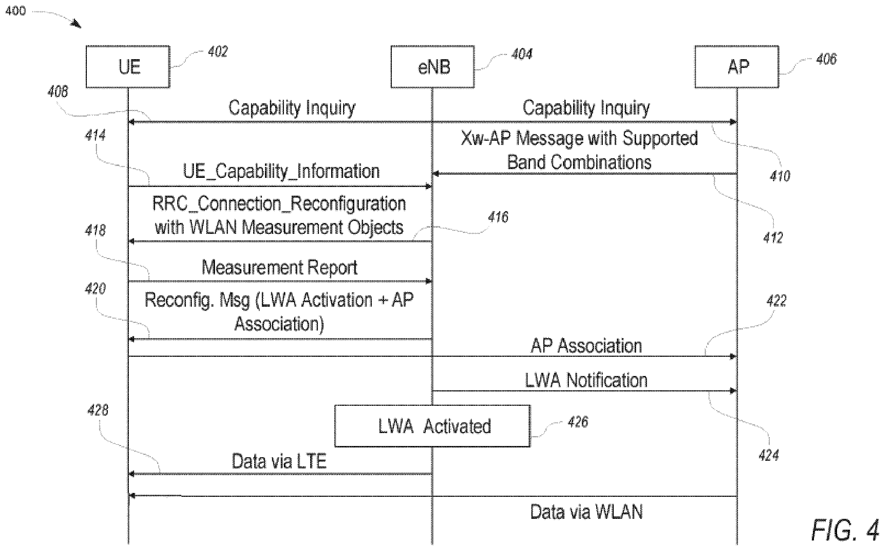

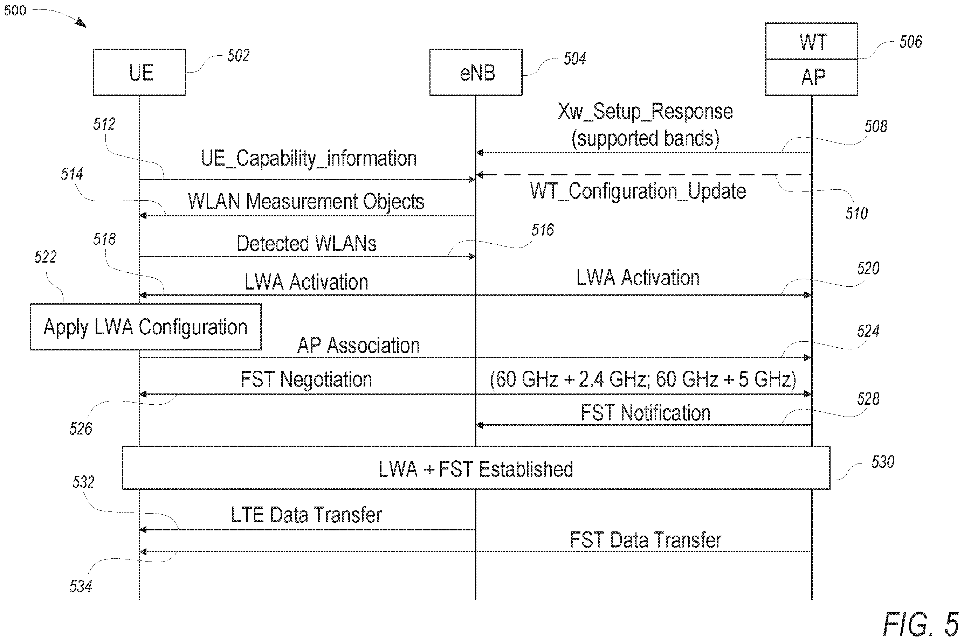

WT 172 is a node that may physically be integrated with wireless circuitry in AP 105 (or in an access controller), or may be integrated with an access controller or another physical entity separate from AP 105 that is connected to AP 105. Regardless of whether WT 172 is integrated with AP 105 or separate from AP 105, LWA communications using eNB 104 and AP 105 can be managed through WT 172. This may include channel condition information or any other such information (e.g., as discussed in reference to FIG. 4 and FIG. 5) used by eNB 104 to manage LWA communications using AP 105.

In order to establish the Xw 192 interface, eNB 104 can use a Transport Network Layer (TNL) address, which may be, for example, an Internet protocol (IP) address of WT 172. Without the IP address of WT 172, eNB 104 may be unable to establish Xw 192. While in some embodiments, IP addresses for some WTs and other information (e.g. SSID/BSSID) for corresponding APs may be provided directly by operator entry or selection, APs may be reconfigured or changed.

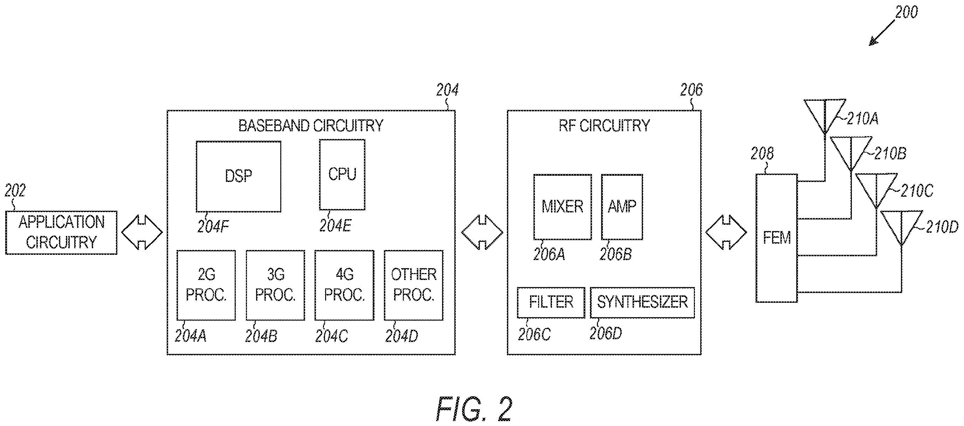

FIG. 2 is a functional diagram of a User Equipment (UE) in accordance with some embodiments. The UE 200 may be suitable for use as a UE 102 as depicted in FIG. 1 A. In some embodiments, the UE 200 may include application circuitry' 202, baseband circuitry-204, Radio Frequency (RF) circuitry 206, front-end module (FEM) circuitry 208, and multiple antennas 210A-210D, coupled together at least as shown. In some embodiments, other circuitry or arrangements may include one or more elements or components of the application circuitry 202, the baseband circuitry 204, the RF circuitry 206 or the FEM circuitry 208, and may also include other elements or components in some cases. As an example, "processing circuitry" may include one or more elements or components, some or all of which may be included in the application circuitry 202 or the baseband circuitry 204. As another example, "transceiver circuitry" may include one or more elements or components, some or all of which may be included in the RF circuitry 206 or the FEM circuitry 208. These examples are not limiting, however, as the processing circuitry or the transceiver circuitry may also include other elements or components in some cases.

The application circuitry 202 may include one or more application processors. For example, the application circuitry 202 may include circuitry such as, but not limited to, one or more single-core or multi-core processors. The processor)s( may include any combination of general-purpose processors and dedicated processors (e.g., graphics processors, application processors, etc .(.The processors may be coupled with or may include memory/storage and may be configured to execute instructions stored in the memory/storage to enable various applications or operating systems to run on the system to perform one or more of the functionalities described herein.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a second generation (2G) baseband processor 204a, third generation (3G) baseband processor 204b, fourth generation (4G) baseband processor 204c, or other baseband processor/s) 204d for other existing generations, generations in development or to be developed in the future (e.g., fifth generation (5G), 6G, etc.). The baseband circuitry 204 (e.g., one or more of baseband processors 204a-d) may handle various radio control functions that enable communication with one or more radio networks via the RF circuitry 206. The radio control functions include may, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include Low Density Parity Check (LDPC) encoder/decoder functionality, optionally along-side other techniques such as, for example, block codes, convolutional codes, turbo codes, or the like, which may be used to support legacy protocols. Embodiments of modulation/demodulation and encoder/decoder functionality are not limited to these examples and may include other suitable functionality in other embodiments.

In some embodiments, the baseband circuitry 204 may include elements of a protocol stack such as, for example, elements of an evolved universal terrestrial radio access network (EUTRAN) protocol including, for example, physical (PHY) media access control (MAC), radio link control (RLC) packet data convergence protocol (PDCP), or radio resource control (RRC) elements. A central processing unit (CPU) 204e of the baseband circuitry 204 may be configured to run elements of the protocol stack for signaling of the PHY, MAC, RLC, PDCP or RRC layers. In some embodiments, the baseband circuitry may include one or more audio digital signal processor(s) (DSP) 204f. The audio DSP(s) 204f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry204 and the application circuitry202 may be implemented together such as, for example, on a system on chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than be referred to as multi one wireless protocol may-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM: circuitry 208 based on the synthesized frequency provided by synthesizer circuitry 206d. The amplifier circuitry 206b may be configured to amplify the down-converted signals and the filter circuitry 206c may be a low-pass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect. In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF ), although the scope of the embodiments is not limited in this respect.

In some embodiments, the mixer circuitry 206a of the receive signal path and the mixer circuitry 206a of the transmit signal path may include two or more mixers and may be arranged for quadrature downconversion or upconversion respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion or direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206. In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesi zer or a fractional N/N+l synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider. The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+l synthesizer. In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+l (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path, which may include circuitry configured to operate on RF signals received from one or more of the antennas 210A-D, amplify the received signals and provide the amplified versions of the received signals to the RF circuitry 206 for further processing. FEM circuitry' 208 may also include a transmit signal path which may include circuitry configured to amplify signals for transmission provided by the RF circuitry 206 for transmission by one or more of the one or more antennas 2I0A- D.

In some embodiments, the FEM circuitry 208 may include a TXZRX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210. In some embodiments, the UE 200 may include additional elements such as, for example, memory/storage, display, camera, sensor, or input/output (I/O) interface.

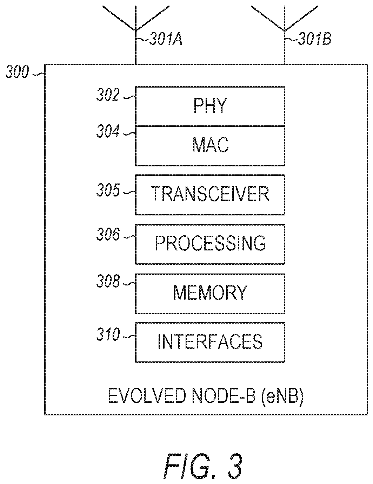

FIG. 3 is a functional diagram of an Evolved Node-B (eNB) in accordance with some embodiments. It should be noted that in some embodiments, the eNB 300 may be a stationary non-mobile device. The eNB 300 may be suitable for use as an eNB 104 as depicted in FIG. 1A. The components of eNB 300 may be included in a single device or a plurality of devices. The eNB 300 may include physical layer (PHY) circuitry 302 and a transceiver 305, one or both of which may enable transmission and reception of signals to and from the UE 200, other eNBs, other UEs or other devices using one or more antennas 301A-B. As an example, the physical layer circuitry 302 may perform various encoding and decoding functions that may include formation of baseband signals for transmission and decoding of received signals. For example, physical layer circuitry 302 may include LDPC encoder/decoder functionality, optionally along-side other techniques such as, for example, block codes, convolutional codes, turbo codes, or the like, which may be used to support legacy protocols. Embodiments of modulation/demodulation and encoder/decoder functionality are not limited to these examples and may include other suitable functionality in other embodiments. As another example, the transceiver 305 may perform various transmission and reception functions such as conversion of signals between a baseband range and a Radio Frequency (RF) range. Accordingly, the physical layer circuitry 302 and the transceiver 305 may be separate components or may be part of a combined component. In addition, some of the described functionality related to transmission and reception of signals may be performed by a combination that may include one, any or all of the physical layer circuitry 302, the transceiver 305, and other components or layers. The eNB 300 may also include medium access control layer (MAC) circuitry 304 for controlling access to the wireless medium. The eNB 300 may also include processing circuitry 306 and memory 308 arranged to perform the operations described herein. The eNB 300 may also include one or more interfaces 310, which may enable communication with other components, including other eNB 104 (FIG. 1), components in the EPC 120 (FIG. 1) or other network components. In addition, the interfaces 310 may enable communication with other components that may not be shown in FIG. 1, including components external to the network. The interfaces 310 may be wired or wireless or a combination thereof.

The antennas 210A-D (in the UE) and 301A-B (in the eNB) may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 210A-D, 301 A-B may be effectively separated to take advantage of spatial diversity and the different channel characteristics that may result.

In some embodiments, the UE 200 or the eNB 300 may be a mobile device and may be a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a wearable device such as a medical device (e.g., a heart rate monitor, a blood pressure monitor, etc.), or other device that may receive or transmit information wirelessly. In some embodiments, the UE 200 or eNB 300 may be configured to operate in accordance with 3GPP standards, although the scope of the embodiments is not limited in this respect. Mobile devices or other devices in some embodiments may be configured to operate according to other protocols or standards, including IEEE 802.11 or other IEEE standards. In some embodiments, the UE 200, eNB 300 or other device may include one or more of a keyboard, a display, a non-volatile memory port, multiple antennas, a graphics processor, an application processor, speakers, and other mobile device elements. The display may be an LCD screen including a touch screen.

Although the UE 200 and the eNB 300 are each illustrated as having several separate functional elements, one or more of the functional elements may be combined and may be implemented by combinations of software-configured elements, such as processing elements including digital signal processors (DSPs), or other hardware elements. For example, some elements may comprise one or more microprocessors, DSPs, field- programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus used by the UE 200 or eNB 300 may include various components of the UE 200 or the eNB 300 as shown in FIG. 2 and FIG. 3. Accordingly, techniques and operations described herein that refer to the UE 200 (or 102) may be applicable to an apparatus for a UE. In addition, techniques and operations described herein that refer to the eNB 300 (or 104) may be applicable to an apparatus for an eNB.

Even though specific durations (e.g., time interval duration, transmission time etc.) and specific bit sequence sizes are mentioned herein, the disclosure may not be limited in this regard, and specific numbering designations are for illustrative purposes only.

FIG. 4 is a diagram illustrating communication between eNB, UE and access point (AP) for activating LWA in accordance with some embodiments. Release-13 LTE-WLAN Aggregation (LWA) allows aggregation of an LTE link with either a 2.4 GHz or a 5 GHz WLAN link (also known as Wi-Fi). Enhanced LWA (eLWA) adds support for a 60 GHz band so that an LTE link can be aggregated with a 2.4 GHz, a 5 GHz, or a 60 GHz band. In an example, a fast session transfer (FST) is used, which can enable wireless devices to transition IP packet streams between the 60 GHz frequency band and one or both of the legacy 2.4 GHz and 5 GHz bands. The FST feature can be used for dynamically controlling aggregation of 2.4 GHz, 5 GHz and 60 GHz links, as fast session transfer can be performed on packet by packet basis. As many Wi-Fi and WiGig device implementation can have separate RF, PHY and MAC modules, concurrent 2.4 GHz and 5 GHz operation can be performed, as well as aggregation between these two links can also be supported.

In an example, in instances when both AP and UE support eLWA, aggregation of the LTE link with one or more Wi-Fi bands (including 60 GHz band) can be controlled by the LTE side (e.g., eNB) or by the Wi-Fi side (e.g., UE-AP).

In an example operation when aggregation is controlled by the LTE side, the AP can report (e.g., through the WT and using Xw-AP protocol link) to the eNB that it supports all three bands: 2.4GHz, 5GHz and 60Ghz. The UE can also report its capability of the same information via one or more radio resource control (RRC) communications. The eNB can then determine (based on UE measurements in all supported bands) whether LTE is aggregated with WLAN operating in 2.4GHz, 5GHz and/or 60GHz band. In this case, the eNB can have control and select which 802.11 band is used for LWA.

In an example operation when aggregation is controlled by the Wi-Fi side, both the AP and the UE may report to eNB that they not only support 60 GHz (in addition to 2.4Ghz and 5GHz), but also whether they support concurrent operation in two or more bands (i.e. fast session transfer). The reporting mechanisms that can be used are an Xw-AP link between the AP (or WT) and the eNB, and RRC signaling between the eNB and the UE. In this case, the eNB can schedule WLAN measurements in 2.4 GHz and/or 5 GHz bands (the 60 GHz band support can become "hidden" to the eNB through fast session transfer). Once the UE is configured to use LWA, it may (e.g., using 802.11 communication mechanisms) add 60 GHz link to either a 2.4 GHz or a 5 GHz link. Once FST is enabled between the AP and the UE, the WT or UE may report the FST availability and activation to the eNB, as this information (i.e., increased bandwidth for the eNB) may affect eNB scheduling decisions. The advantage of this aggregation option is that it re-uses existing 802.11 functionality, allowing aggregation of LTE, 2.4 GHz / 5 GHz, and 60 GHz bands. The above mentioned two aggregation techniques are also illustrated in greater detail in FIGS. 4-6.

Referring to FIG. 4, the example communication sequence 400 can be used for establishing LWA or eLWA between a UE 402, an eNB 404 and an AP 406, which can be similar to the UE 102, eNB 104 and AP 105, respectively. In the communication sequence 400, Xw-AP and RRC signaling messages can be enhanced to support an additional, i.e., 60 GHz band, for eLWA. Both the UE and the WT (or AP) may report to the eNB that they support 2.4 GHz, 5 GHz and 60 GHz bands, or any combination of these bands. With this information, the eNB can determine on which bands to schedule UE WLAN measurements and which bands wall be used for eLWA, when it is enabled. In an example, if the AP 406 supports multiple bands, different BSSIDs can be used in different bands.

At 408 and 410, the eNB 404 can communicate capability inquiries to the UE 402 and the AP 406, respectively. At 412, the WT (or AP 406) indicates to the eNB (e.g. using XW SETUP RESPONSE or WT CONFIGURATION UPDATE Xw-AP messages) which bands (or which band combinations) the AP supports, including, e.g., 2.4 GHz, 5 GHz and/or 60 GHz bands. In an example, to indicate support for 60 GHz band, the "WLAN Band Information" information element (IE) in the Xw-AP messages can be updated to include the 60 GHz band.

At 414, the UE 402 can indicate to the eNB 404 (e.g., using UE CAPABILITY INFORMATION message or another type of capabilities exchange messaging) that it supports, e.g., 2.4 GHz, 5 GHz and/or 60 GHz bands, or one or more combinations of such bands. In an example, to indicate support for 60 GHz band, the "WLAN Band Information" information element (IE) in the capabilities exchange messaging can be updated to include the 60 GHz band.

The eNB 404 can then configure WLAN measurement objects for the supported band (or bands), e.g., 5 GHz and 60 GHz, or for all three bands or any combination of them, using multiple measurement objects. At 416, an RRC CONNECTION RECONFIGURATION message (or another RRC type message) can be communicated to the UE 402 with the measurement objects. At 418, the UE 402 can report detected WLANs as well as measurements based on the measurement objects in a measurement report. In instances when a detected AP (e.g., 406) supports multiple (e.g., all three) bands, different APs with different BSSIDs can be reported to the eNB 404.

The eNB 404, based on the WLAN measurements reported from the UE 402, can determine to activate LWA, indicating to the UE which band (2.4GHz, 5GHz or 60GHz) to use with LWA in addition to an LTE link. In this regard, the eNB 404 can send a reconfiguration message at 420, with instructions to the UE 402 as to which AP (or APs) to associate with as well as LWA activation instructions and configurations.

At 422, the UE 402 can apply the LWA configuration and can associate with the selected AP 406. At 424, the eNB 404 can send a notification to the AP 406 that LWA is activated and which Wi-Fi bands to use when communicating with the UE 402. LWA can be activated for all entities at 426 so that data can be communicated from the eNB 404 via an LTE link (e.g., at 428) and from the AP 406 to the UE 402 via a WLAN fink (2.4 GHz, 5 GHz, or 60 GHz).

In an example, a similar LWA establishment mechanism can be used for mobility and can be controlled by the eNB using measurement reporting from the UE and the AP in all three bands. In an example, the eNB may have the flexibility to "mix and match" APs supporting different bands in the same WLAN mobility set. In an example, the eNB 404 may send an indication to the UE 402 and the AP 406 (or its corresponding WT) which bands it shall use, when connecting to the configured WLAN mobility set.

FIG. 5 is another diagram illustrating communication between eNB, LIE and access point (AP) for activating LWA in accordance with some embodiments. In an example, Xw-AP and RRC signaling messages are enhanced to support concurrent operation in two or more bands. That is, in addition to indicating which bands (i.e., 2.4 GHz, 5 GHz and 60 GHz), the UE and the WT (or AP) indicate to the eNB (using RRC and Xw-AP protocols, respectively) that they also support Wi-Fi fast session transfer (FST) in different band combinations, e.g. (2.4 GHz, 5 GHz, and 60 GHz), (2.4 GHz and 60 GHz), or (5 GHz and 60 GHz). With this information the eNB may decide to schedule UE measurements in 2.4GHz and/or 5GHz bands only (or all three bands) and enable LW A (or decide on mobility) based on measurement information in these bands. The UE and AP may then negotiate support for Fast Session Transfer (FST) and add 60 GHz band to either 2.4 GHz band or 5 GHz band when communicating with the UE. Even if FST is supported by the UE and the AP, the eNB may still decide to control "individually" which WLAN bands are used for LW A.

Referring to FIG. 5, the example communication sequence 500 can be used for establishing eLWA between a UE 502, an eNB 504 and an AP 506, which can be similar to the UE 102, eNB 104 and AP 105, respectively. At 508 and 510, the WT (or AP 506) indicates to the eNB (e.g. using XW SETUP RESPONSE or WT CONFIGURATION UPDATE Xw-AP messages) which bands (or which band combinations) the AP supports, including, e.g., 2.4 GHz, 5 GHz and/or 60 GHz bands. In an example, to indicate support for 60 GHz band, the "WLAN Band Information" information element (IE) in the Xw-AP messages can be updated to include the 60 GHz band.

At 512, the UE 502 can indicate to the eNB 504 (e.g., using UE CAPABILITY INFORMATION message or another type of capabilities exchange messaging) that it supports, e.g., 2.4 GHz, 5 GHz and/or 60 GHz bands, or one or more combinations of such bands. In an example, to indicate support, for 60 GHz band, the "WLAN Band Information" information element (IE) in the capabilities exchange messaging can be updated to include the 60 GHz band.

The eNB 504 can then configure WLAN measurement objects for the supported band (or bands), e.g., 5 GHz and 60 GHz, or for all three bands or any combination of them, using multiple measurement objects. At 514, an RRC CONNECTION RECONFIGURATION message (or another RRC type message) can be communicated to the UE 502 with the measurement objects. At 516, the UE 502 can report detected WLANs as well as measurements based on the measurement objects in a measurement report. In instances when a detected AP (e.g., 506) supports multiple (e.g., all three) bands, different APs with different BSSIDs can be reported to the eNB 504.

The eNB 504, based on the WLAN measurements reported from the UE 502, can determine to activate LWA and send (at 518 and 520) LWA activation configurations to the UE 502 and AP 506, respectively. The LWA activation messages can indicate to the UE and the AP which band (2.4GHz, 5GHz or 60GHz) to use with LWA in addition to an LTE link. The LWA activation messages can also include instructions to the UE 502 as to which AP (or APs) to associate with as well as LWA activation instructions and configurations.

At 522, the UE 502 can apply the LWA configuration and can associate with the selected AP 506 using the AI³ association indicated as 524.

At 526, the UE 502 and the AP 506 can negotiate fast session transfer support and may add 60 GHz band to 2.4 GHz band and/or 5 GHz band. In instances when the UE and the AP decide to use fast session transfer, the AP may send a notification at 528 to the eNB 504 of the enabled FST and which band combination the FST will use. Similar FST notification may also be sent by the UE to the eNB. The eNB may use the FST notification to, e.g., adjust available bandwidth for scheduling purposes.

At 530, LWA with FST is be established so that data can be communicated from the eNB 504 via an LTE link (e.g., at 532) and from the AP 506 to the UE 502 (at 534) via a WLAN FST (2.4 GHz, 5 GHz, and/or 60 GHz). In an example, the UE or AP may enable or disable FST and LWA can take place as described in reference to FIG. 4. In instances when FST is enabled or disabled, the UE or AP can send a corresponding notification to the eNB (e.g., so that the eNB can adjust available bandwidth for purposes of subsequent scheduling).

In an example, a similar LWA establishment mechanism as described in reference to FIG. 5 can be used for mobility and can be controlled by the eNB using measurement reporting from the UE and the AP in all three bands.

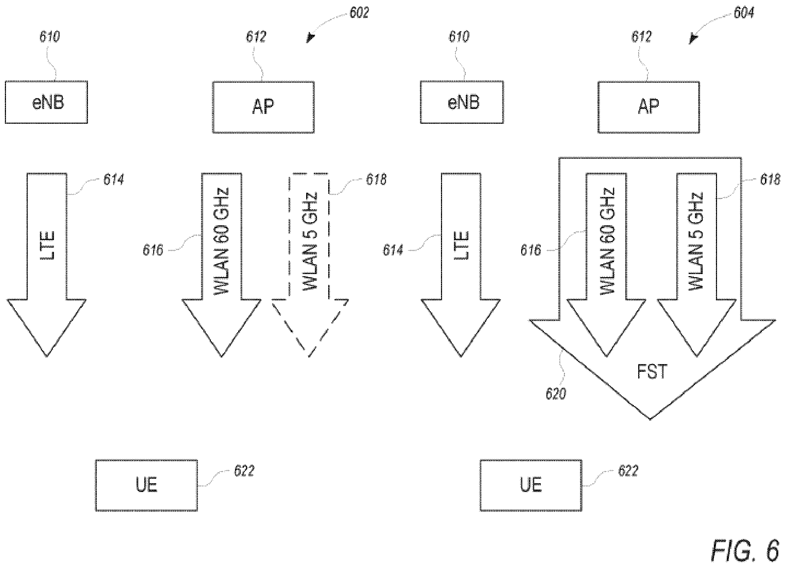

FIG. 6 illustrates LWA communication to a UE with and without the use of fast session transfer (FST) in accordance with some examples. Referring to FIG. 6, there are illustrated two LWA communication scenarios 602 and 604. Communication scenario 602 can be an example of eLWA communications as discussed in reference to FIG. 4. More specifically, LWA can be established so that data can be communicated from the eNB 610 to the UE 622 via an LTE link 614. The LTE link 614 can be aggregated in LWA with a WLAN link 616 (e.g., using 60 GHz band) for communicating data between the AP 612 and the UE 622. Alternatively, the WLAN link can include a link 618 using 5 GHz instead (or 2.4 GHz can be used as well).

Communication scenario 604 can be an example of eLWA with FST communications as discussed in reference to FIG. 5. More specifically, LWA can be established so that data can be communicated from the eNB 610 to the UE 622 via an LTE link 614. The LTE link 614 can be aggregated in LWA with a WLAN link 616 (e.g., using 60 GHz band) and WLAN link 618 for communicating data between the AP 612 and the UE 622. The WTLAN links 616 and 618 can be further integrated and used in a FST 620 established between the AP 612 and the UE 622. Alternatively, the FST 620 may also include a third communication link using 2.4 GHz. Other combinations of the 2.4 GHz, 5 GHz and 60 GHz bands in the FST 620 are also possible.

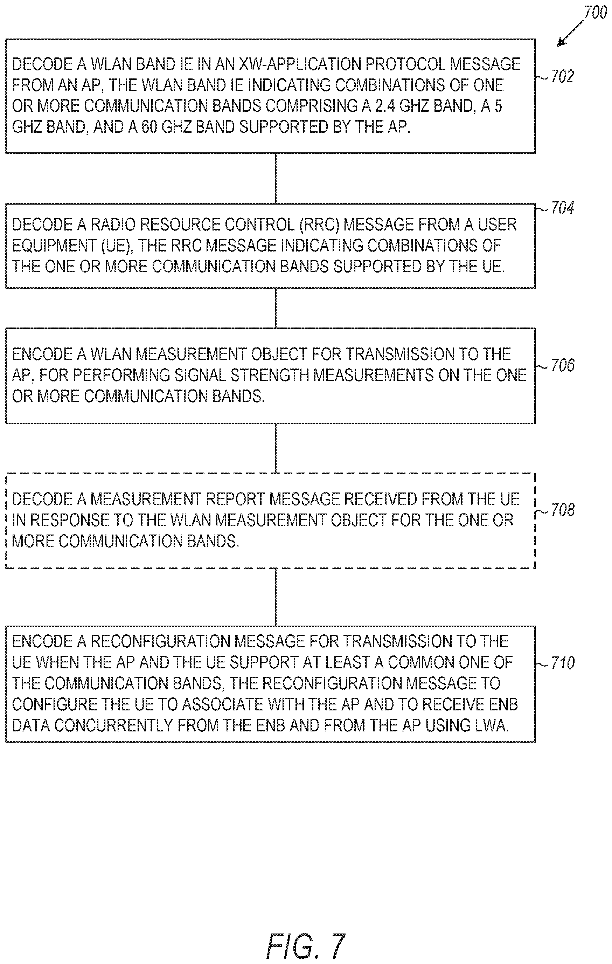

FIG. 7 is a flow diagram illustrating example functionalities for communicating information using LWA, in accordance with some embodiments. Referring to FIG. 7, the example method 700 may start at 702, when a WLAN Band Information element (IE) can be decoded (e.g., by the eNB 404). The WLAN Band IE may be in an Xw-Application Protocol message from an access point (AP) (e.g. 406). The WLAN Band IE can indicate combinations of one or more communication bands comprising a 2.4 GHz band, a 5 GHz band, and a 60 GHz band supported by the AP. At 704, a radio resource control (RRC) message from a user equipment (e.g., UE 402) can be decoded (e.g., by eNB 404). The RRC message can include a UE CAPABILITTY INFORMATION message indicating combinations of the one or more communication bands supported by the UE. At 706, a WLAN measurement object can be encoded for transmission to the AP, for performing measurements (e.g., signal strength measurements, BSSID identification, or other measurements) on the one or more communication bands. For example, an RRC Connection Reconfiguration message with the WLAN measurement objects can be communicated (e.g., at 416) to the UE 402. At 708, optionally, a Measurement Report message received from the UE can be decoded. The measurement report message can be received (e.g., at 418) in response to the WLAN measurement object for the one or more communication bands. At 710, a reconfiguration message can be encoded for transmission to the UE when the AP and the UE support at least a common one of the communication bands. The reconfiguration message can be communicated to the UE (e.g., at 420) to configure the UE to associate with the AP and to receive eNB data concurrently from the eNB and from the AP using Long Term Evolution (LTE)/Wireless Local Area Network (WLAN) Aggregation (LWA).

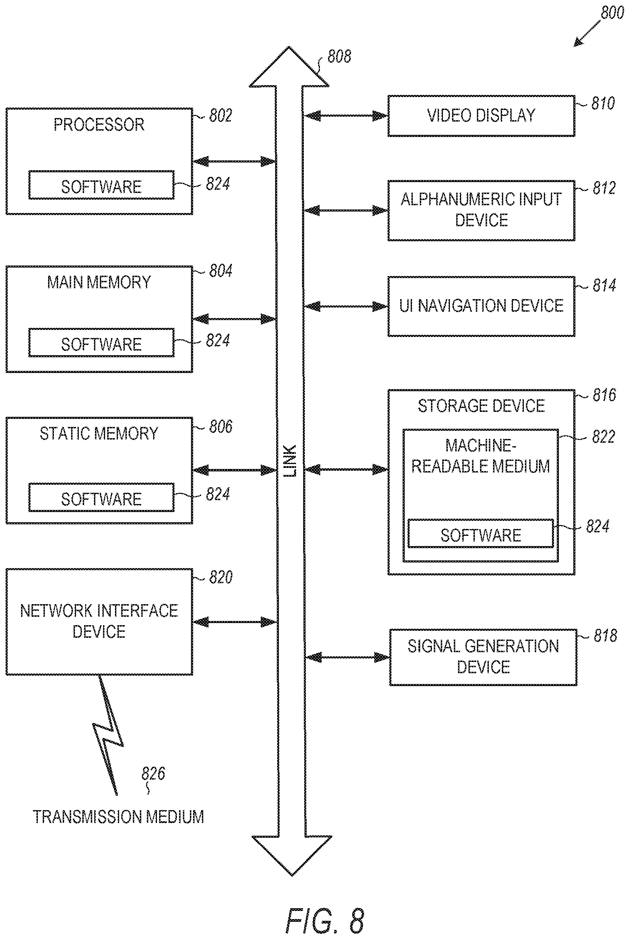

FIG. 8 illustrates a block diagram of a communication device such as an eNB, a UE, or an AP, in accordance with some embodiments. In alternative embodiments, the communication device 800 may operate as a standalone device or may be connected (e.g., networked) to other communication devices. In a networked deployment, the communication device 800 may operate in the capacity of a server communication device, a client communication device, or both in server-client network environments. In an example, the communication device 800 may act as a peer communication device in peer-to-peer (P2P) (or other distributed) network environment. The communication device 800 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium, fa an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., UE) 800 may include a hardware processor 802 (e.g., a central processing unit (CPU), a graphics processing unit (GPU), a hardware processor core, or any combination thereof), a main memory 804 and a static memory 806, some or all of which may communicate with each other via an interlink (e.g., bus) 808. The communication device 800 may further include a display unit 810, an alphanumeric input device 812 (e.g., a keyboard), and a user interface (UI) navigation device 814 (e.g., a mouse). In an example, the display unit 810, input device 812 and UI navigation device 814 may be a touch screen display. The communication device 800 may additionally include a storage device (e.g., drive unit) 816, a signal generation device 818 (e.g., a speaker), a network interface device 820, and one or more sensors, such as a global positioning system (GPS) sensor, compass, accelerometer, or other sensor. The communication device 800 may include an output controller, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 816 may include a communication device readable medium 822 on which is stored one or more sets of data structures or instructions 824 (e.g., software) embodying or utilized by any one or more of the techniques or functions described herein. The instructions 824 may also reside, completely or at least partially, within the main memory 804, within static memory 806, or within the hardware processor 802 during execution thereof by the communication device 800. In an example, one or any combination of the hardware processor 802, the main memory 804, the static memory 806, or the storage device 816 may constitute communication device readable media.

While the communication device readable medium 822 is illustrated as a single medium, the term "communication device readable medium" may include a single medium or multiple media (e.g., a centralized or distributed database, and/or associated caches and servers) configured to store the one or more instructions 824.

The term "communication device readable medium" may include any medium that is capable of storing, encoding, or carrying instructions for execution by the communication device 800 and that cause the communication device 800 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory/ devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 824 may further be transmitted or received over a communications network 826 using a transmission medium via the network interface device 820 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 820 may include one or more physical jacks (e.g., Ethernet, coaxial, or phonejacks) or one or more antennas to connect to the communications network 826. In an example, the network interface device 820 may include a plurality of antennas to wirelessly communicate using at least one of single-input multiple-output (SIMO), MIMO, or multiple-input single-output (MISO) techniques. In some examples, the network interface device 820 may wirelessly communicate using Multiple User MIMO techniques. The term "transmission medium" shall be taken to include any intangible medium that is capable of storing, encoding or carrying instructions for execution by the communication device 800, and includes digital or analog communications signals or other intangible medium to facilitate communication of such software.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims.

## Claims

1. An apparatus of an evolved NodeB, eNB, (404) the apparatus comprising: memory (308); and processing circuitry (306), configured to:
decode a WLAN Band information element, IE, in an Xw-Application Protocol message (412) from an access point, AP, (406) via a WLAN termination, WT, (172) the WLAN Band IE indicating combinations of one or more communication bands comprising a 2.4 GHz band, a 5 GHz band, and a 60 GHz band supported by the AP;
decode a radio resource control, RRC, message from a user equipment, UE, (402) the RRC message indicating combinations of the one or more communication bands supported by the UE;
encode a WLAN measurement object (416) for transmission to the UE, for performing signal strength measurements on the one or more communication bands; and
based on the measurements, encode a reconfiguration message (420) for transmission to the UE when the AP and the UE support at least a common one of the communication bands, the reconfiguration message to configure the UE to associate with the AP and to receive eNB data concurrently from the eNB and from the AP using Long Term Evolution, LTE/Wireless Local Area Network, WLAN, Aggregation, LWA,
wherein the WLAN Band IE indicates the AP (506) supports fast session transfer, FST, on a first combination of the 5 GHz band and the 60 GHz band, or a second combination of the 2.4 GHz band and the 60 GHz band and wherein the RRC message indicates the UE (502) supports FST on the first combination of the 5 GHz band and the 60 GHz band, or the second combination of the 2.4 GHz band and the 60 GHz band.

2. The apparatus of claim 1, wherein the processing circuitry is further configured to: encode a UE Capability Inquiry message (408) for transmission to the UE, the UE Capability Inquiry message for inquiring about the one or more communication bands supported by the UE.

3. The apparatus of claim 1, wherein the RRC message from the UE is a UE Capability Information message (414).

4. The apparatus of claim 1, wherein the processing circuitry is further configured to: encode the WLAN measurement object for transmission to the UE using an RRC Connection Reconfiguration message (416), the WLAN measurement object for configuring the UE to perform the measurements of the one or more communication bands supported by the AP.

5. The apparatus of claim 1, wherein the Xw-AP message (412) is one of an Xw Setup Response message or a WLAN Termination, WT, Configuration Update message.

6. The apparatus of claim 1, wherein the WLAN Band IE indicates the AP (406) supports the 2.4 GHz band, the 5 GHz band, and the 60 GHz band.

7. The apparatus of claim 6, wherein the processing circuitry (306) is further configured to: in response to the WLAN measurement object (416), decode a Measurement Report message (418) to obtain the signal strength measurements and basic service set IDs, BSSIDs, for WLANs corresponding to the 2.4 GHz band, the 5 GHz band, and the 60 GHz band supported by the AP (406).

8. The apparatus of claim 7, wherein the reconfiguration message identifies one of the BSSIDs for association with the UE (402).

9. The apparatus of claim 1, wherein the processing circuitry (306) is further configured to: upon determining that the AP (506) and the UE (502) both support FST, encode the reconfiguration message for transmission to the UE, the reconfiguration message (518) to configure the UE to associate with the AP and to receive eNB data concurrently from the eNB and from the AP via the WT using Long Term Evolution, LTE/Wireless Local Area Network, WLAN, Aggregation, LWA, and FST.

10. The apparatus of claim 1, further comprising:
a UE transceiver arranged to communicate with the UE (402); and
an AP transceiver arranged to communicate with the AP (406).

11. The apparatus of claim 10, further comprising:
a plurality of antennas (310) configured to provide communications between the UE transceiver and the UE (402), and between the AP transceiver and the AP (406).

12. An apparatus of a user equipment, UE, (402) the apparatus comprising:
memory; and processing circuitry configured to:
encode a first radio resource control, RRC, message for transmission to an evolved Node-B, eNB, (404) the RRC message indicating combinations of one or more communication bands comprising a 2.4 GHz band, a 5 GHz band, and a 60 GHz band (414) supported by the UE;
perform channel measurements on one or more communication bands supported by an access point, AP, (406) detected by the UE;
encode a second RRC message (418) for transmission to the eNB, the second RRC message to provide an indication to the eNB of the channel measurements; and
in response to the second RRC message, decode a reconfiguration message (420) from the eNB to associate (422) with the AP and to communicate data respectively with the eNB and with the AP for the eNB, using Long Term Evolution, LTE/Wireless Local Area Network, WLAN, Aggregation LWA,
wherein the first RRC message indicates the UE (402) supports fast session transfer, FST, on a first combination of the 5 GHz band and the 60 GHz band, or a second combination of the 2.4 GHz band and the 60 GHz band.

13. An apparatus of an access point, AP, (406) the apparatus comprising:
memory; and processing circuitry configured to:
encode a WLAN Band information element, IE, in an Xw-Application Protocol message (412) for transmission to an evolved Node-B, eNB, (404) via a WLAN termination, WT, the WLAN Band IE indicating combinations of one or more communication bands comprising a 2.4 GHz band, a 5 GHz band, and a 60 GHz band supported by the AP for concurrent communication;
and
encode data for transmission to the UE using Long Term Evolution, LTE/Wireless Local Area Network, WLAN, Aggregation, LWA,
wherein the WLAN Band IE indicates the AP (406) supports fast session transfer, FST, on a first combination of the 5 GHz band and the 60 GHz band, or a second combination of the 2.4 GHz band and the 60 GHz band.

## Patentansprüche

1. Vorrichtung eines evolved NodeB, eNB, (404) wobei die Vorrichtung umfasst: einen Speicher (308); und eine Verarbeitungsschaltung (306), die konfiguriert ist zum:
Decodieren eines WLAN-Bandinformationselements, IE, in einer Xw-Anwendungsprotokoll-Nachricht (412) von einem Zugangspunkt, AP, (406) über einen WLAN-Abschluss, WT, (172), wobei das WLAN-Band-IE Kombinationen von einem oder mehreren Kommunikationsbändern anzeigt, die ein 2,4-GHz-Band, ein 5-GHz-Band und ein 60-GHz-Band umfassen, die durch den AP unterstützt werden;
Decodieren einer Funkressourcensteuerungs-, RRC-, Nachricht von einem Benutzergerät, UE, (402), wobei die RRC-Nachricht Kombinationen des einen oder der mehreren Kommunikationsbänder anzeigt, die durch das UE unterstützt werden;
Codieren eines WLAN-Messobjekts (416) zur Übertragung an das UE zum Durchführen von Signalstärkemessungen auf dem einen oder den mehreren Kommunikationsbändern; und
basierend auf den Messungen, Codieren einer Rekonfigurationsnachricht (420) zur Übertragung an das UE, wenn der AP und das UE mindestens ein gemeinsames der Kommunikationsbänder unterstützen, wobei die Rekonfigurationsnachricht das UE zum Assoziieren mit dem AP und zum gleichzeitigen Empfangen von eNB-Daten von dem eNB und von dem AP unter Verwendung von Long Term Evolution, LTE/Wireless Local Area Network, WLAN, Aggregation, LWA, konfiguriert,
wobei das WLAN-Band-IE anzeigt, dass der AP (506) schnelle Sitzungsübertragung, FST, auf einer ersten Kombination des 5-GHz-Bands und des 60-GHz-Bands oder einer zweiten Kombination des 2,4-GHz-Bands und des 60-GHz-Bands unterstützt, und wobei die RRC-Nachricht anzeigt, dass das UE (502) FST auf der ersten Kombination des 5-GHz-Bands und des 60-GHz-Bands oder der zweiten Kombination des 2,4-GHz-Bands und des 60-GHz-Bands unterstützt.

2. Vorrichtung nach Anspruch 1, wobei die Verarbeitungsschaltung ferner konfiguriert ist zum: Codieren einer UE-Fähigkeitsabfragenachricht (408) zur Übertragung an das UE, wobei die UE-Fähigkeitsabfragenachricht zum Abfragen des einen oder der mehreren Kommunikationsbänder ist, die durch das UE unterstützt werden.

3. Vorrichtung nach Anspruch 1, wobei die RRC-Nachricht von dem UE eine UE-Fähigkeitsinformationsnachricht (414) ist.

4. Vorrichtung nach Anspruch 1, wobei die Verarbeitungsschaltung ferner konfiguriert ist zum: Codieren des WLAN-Messobjekts zur Übertragung an das UE unter Verwendung einer RRC-Verbindungsrekonfigurationsnachricht (416), wobei das WLAN-Messobjekt zum Konfigurieren des UE zum Durchführen der Messungen des einen oder der mehreren Kommunikationsbänder ist, die durch den AP unterstützt werden.

5. Vorrichtung nach Anspruch 1, wobei die Xw-AP-Nachricht (412) eine von einer Xw-Einrichtungsantwortnachricht oder einer WLAN-Abschluss, WT,-Konfigurationsaktualisierungsnachricht ist.

6. Vorrichtung nach Anspruch 1, wobei das WLAN-Band-IE angibt, dass der AP (406) das 2,4-GHz-Band, das 5-GHz-Band und das 60-GHz-Band unterstützt.

7. Vorrichtung nach Anspruch 6, wobei die Verarbeitungsschaltung (306) ferner konfiguriert ist zum: Decodieren einer Messberichtsnachricht (418) als Reaktion auf das WLAN-Messobjekt (416), um die Signalstärkemessungen und Basisdienstsatz-IDs, BSSIDs, für WLANs zu erhalten, die dem 2,4-GHz-Band, dem 5-GHz-Band und dem 60-GHz-Band entsprechen, die durch den AP (406) unterstützt werden.

8. Vorrichtung nach Anspruch 7, wobei die Rekonfigurationsnachricht einen der BSSIDs zur Assoziation mit dem UE (402) identifiziert.

9. Vorrichtung nach Anspruch 1, wobei die Verarbeitungsschaltung (306) ferner konfiguriert ist zum: Codieren der Rekonfigurationsnachricht zur Übertragung an das UE beim Bestimmen, dass der AP (506) und das UE (502) beide FST unterstützen, wobei die Rekonfigurationsnachricht (518) das UE zum Assoziieren mit dem AP und zum gleichzeitigen Empfangen von eNB-Daten von dem eNB und von dem AP über das WT unter Verwendung von Long Term Evolution, LTE/Wireless Local Area Network, WLAN, Aggregation, LWA, und FST konfiguriert.

10. Vorrichtung nach Anspruch 1, ferner umfassend:
einen UE-Sendeempfänger, der zum Kommunizieren mit dem UE (402) angeordnet ist; und
einen AP-Sendeempfänger, der zum Kommunizieren mit dem AP (406) angeordnet ist.

11. Vorrichtung nach Anspruch 10, ferner umfassend:
eine Vielzahl von Antennen (310), die zum Bereitstellen von Kommunikationen zwischen dem UE-Sendeempfänger und dem UE (402) und zwischen dem AP-Sendeempfänger und dem AP (406) konfiguriert sind.

12. Vorrichtung eines Benutzergeräts, UE, (402) wobei die Vorrichtung umfasst:
einen Speicher; und eine Verarbeitungsschaltung, die konfiguriert ist zum:
Codieren einer ersten Funkressourcensteuerungs-, RRC-, Nachricht zur Übertragung an einen evolved NodeB, eNB, (404), wobei die RRC-Nachricht Kombinationen eines oder mehrerer Kommunikationsbänder anzeigt, die ein 2,4-GHz-Band, ein 5-GHz-Band und ein 60-GHz-Band (414) umfassen, die durch das UE unterstützt werden;
Durchführen von Kanalmessungen auf einem oder mehreren Kommunikationsbändern, die durch einen Zugangspunkt, AP, (406) unterstützt werden, der durch das UE erkannt wird;
Codieren einer zweiten RRC-Nachricht (418) zur Übertragung an den eNB, wobei die zweite RRC-Nachricht dem eNB eine Anzeige der Kanalmessungen bereitstellt; und
als Reaktion auf die zweite RRC-Nachricht, Decodieren einer Rekonfigurationsnachricht (420) von dem eNB zum Assoziieren (422) mit dem AP und zum Kommunizieren von Daten jeweils mit dem eNB und mit dem AP für den eNB unter Verwendung von Long Term Evolution, LTE/Wireless Local Area Network, WLAN, Aggregation, LWA,
wobei die erste RRC-Nachricht anzeigt, dass das UE (402) schnelle Sitzungsübertragung, FST, auf einer ersten Kombination des 5-GHz-Bands und des 60-GHz-Bands oder einer zweiten Kombination des 2,4-GHz-Bands und des 60-GHz-Bands unterstützt.

13. Vorrichtung eines Zugangspunkts, AP, (406) die Vorrichtung umfassend:
einen Speicher; und eine Verarbeitungsschaltung, die konfiguriert ist zum:
Codieren eines WLAN-Bandinformationselements, IE, in einer Xw-Anwendungsprotokoll-Nachricht (412) zur Übertragung an einen evolved NodeB, eNB, (404) über einen WLAN-Abschluss, WT, wobei das WLAN-Band-IE Kombinationen von einem oder mehreren Kommunikationsbändern anzeigt, die ein 2,4-GHz-Band, ein 5-GHz-Band und ein 60-GHz-Band umfassen, die durch den AP für gleichzeitige Kommunikation unterstützt werden;
und
Codieren von Daten zur Übertragung an das UE unter Verwendung von Long Term Evolution, LTE/Wireless Local Area Network, WLAN, Aggregation, LWA, wobei das WLAN-Band-IE anzeigt, dass der AP (406) schnelle Sitzungsübertragung, FST, auf einer ersten Kombination des 5-GHz-Bands und des 60-GHz-Bands oder einer zweiten Kombination des 2,4-GHz-Bands und des 60-GHz-Bands unterstützt.

## Revendications

1. Un appareil d'un noeud B évolué, eNB, (404), l'appareil comprenant : une mémoire (308) ; et une circuiterie de traitement (306) configurée pour :
décoder un élément d'information, IE, de bande WLAN dans un message de protocole d'application Xw (412) provenant d'un point d'accès, AP, (406) via une terminaison WLAN, WT, (172), l'IE de bande WLAN indiquant des combinaisons d'une ou plusieurs bandes de communication comprenant une bande 2,4 GHz, une bande 5 GHz et une bande 60 GHz, prises en charge par l'AP ;
décoder un message de contrôle de ressources radio, RRC, provenant d'un équipement utilisateur, UE, (402), le message RRC indiquant des combinaisons des une ou plusieurs bandes de communication prises en charge par l'UE ;
coder un objet de mesure WLAN (416) pour une transmission à l'UE, pour la réalisation de mesures d'intensité de signal sur les une ou plusieurs bandes de communication ; et
sur la base des mesures, coder un message de reconfiguration (420) pour une transmission à l'UE quand l'AP et l'UE prennent en charge au moins l'une commune des bandes de communication, le message de reconfiguration étant pour configurer l'UE pour s'associer à l'AP et pour recevoir des données d'eNB simultanément à partir de l'eNB et à partir de l'AP en utilisant une agrégation de réseau local sans fil, WLAN, Évolution à long terme, LTE, LWA,
dans lequel l'IE de bande WLAN indique que l'AP (506) prend en charge un transfert de session rapide, FST, sur une première combinaison de la bande 5 GHz et de la bande 60 GHz ou une deuxième combinaison de la bande 2,4 GHz et de la bande 60 GHz, et dans lequel le message RRC indique que l'UE (502) prend en charge un FST sur la première combinaison de la bande 5 GHz et de la bande 60 GHz ou la deuxième combinaison de la bande 2,4 GHz et de la bande 60 GHz.

2. L'appareil selon la revendication 1, dans lequel la circuiterie de traitement est configurée en outre pour : coder un message d'interrogation de capacité d'UE (408) pour une transmission à l'UE, le message d'interrogation de capacité d'UE étant pour l'interrogation sur les une ou plusieurs bandes de communication prises en charge par l'UE.

3. L'appareil selon la revendication 1, dans lequel le message RRC provenant de l'UE est un message d'information de capacité d'UE (414).

4. L'appareil selon la revendication 1, dans lequel la circuiterie de traitement est configurée en outre pour : coder l'objet de mesure WLAN pour une transmission à l'UE en utilisant un message de reconfiguration de connexion RRC (416), l'objet de mesure WLAN étant pour la configuration de l'UE pour réaliser les mesures des une ou plusieurs bandes de communication prises en charge par l'AP.

5. L'appareil selon la revendication 1, dans lequel le message Xw d'AP (412) est un parmi un message de réponse d'établissement Xw ou un message de mise à jour de configuration de terminaison WLAN, WT.

6. L'appareil selon la revendication 1, dans lequel l'IE de bande WLAN indique que l'AP (406) prend en charge la bande 2,4 GHz, la bande 5 GHz et la bande 60 GHz.

7. L'appareil selon la revendication 6, dans lequel la circuiterie de traitement (306) est configurée en outre pour : en réponse à l'objet de mesure WLAN (416), décoder un message de rapport de mesure (418) pour obtenir les mesures d'intensité de signal et des identifiants d'ensemble de services de base, BSSID, pour des WLAN correspondant à la bande 2,4 GHz, la bande 5 GHz et la bande 60 GHz prises en charge par l'AP (406).

8. L'appareil selon la revendication 7, dans lequel le message de reconfiguration identifie un des BSSID pour une association avec l'UE (402).

9. L'appareil selon la revendication 1, dans lequel la circuiterie de traitement (306) est configurée en outre pour : lors de la détermination qu'à la fois l'AP (506) et l'UE (502) prennent en charge un FST, coder le message de reconfiguration pour une transmission à l'UE, le message de reconfiguration (518) étant pour configurer l'UE pour s'associer à l'AP et pour recevoir des données d'eNB simultanément à partir de l'eNB et à partir de l'AP via la WT en utilisant une agrégation de réseau local sans fil, WLAN, Évolution à long terme, LTE, LWA, et un FST.

10. L'appareil selon la revendication 1, comprenant en outre :
un émetteur-récepteur d'UE agencé pour communiquer avec l'UE (402) ; et
un émetteur-récepteur d'AP agencé pour communiquer avec l'AP (406) .

11. L'appareil selon la revendication 10, comprenant en outre :
une pluralité d'antennes (310) configurées pour assurer des communications entre l'émetteur-récepteur d'UE et l'UE (402) et entre l'émetteur-récepteur d'AP et l'AP (406).

12. Un appareil d'un équipement utilisateur, UE, (402), l'appareil comprenant : une mémoire ; et une circuiterie de traitement configurée pour :
coder un premier message de contrôle de ressources radio, RRC, pour une transmission à un noeud B évolué, eNB, (404), le message RRC indiquant des combinaisons d'une ou plusieurs bandes de communication comprenant une bande 2,4 GHz, une bande 5 GHz et une bande 60 GHz (414) prises en charge par l'UE ;
réaliser des mesures de canal sur une ou plusieurs bandes de communication prises en charge par un point d'accès, AP, (406) détecté par l'UE ;
coder un deuxième message RRC (418) pour une transmission à l'eNB, le deuxième message RRC étant pour fournir une indication à l'eNB des mesures de canal ; et
en réponse au deuxième message RRC, décoder un message de reconfiguration (420) provenant de l'eNB pour s'associer (422) avec l'AP et pour communiquer des données respectivement avec l'eNB et avec l'AP pour l'eNB, en utilisant une agrégation de réseau local sans fil, WLAN, Évolution à long terme, LTE, LWA,
dans lequel le premier message RRC indique que l'UE (402) prend en charge un transfert de session rapide, FST, sur une première combinaison de la bande 5 GHz et de la bande 60 GHz ou une deuxième combinaison de la bande 2,4 GHz et de la bande 60 GHz.

13. Un appareil d'un point d'accès, AP, (406), l'appareil comprenant : une mémoire ; et une circuiterie de traitement configurée pour :
coder un élément d'information, IE, de bande WLAN dans un message de protocole d'application Xw (412) pour une transmission à un noeud B évolué, eNB, (404) via une terminaison WLAN, WT, l'IE de bande WLAN indiquant des combinaisons d'une ou plusieurs bandes de communication comprenant une bande 2,4 GHz, une bande 5 GHz et une bande 60 GHz, prises en charge par l'AP pour une communication simultanée ; et
coder des données pour une transmission à l'UE en utilisant une agrégation de réseau local sans fil, WLAN, Évolution à long terme, LTE, LWA,
dans lequel l'IE de bande WLAN indique que l'AP (406) prend en charge un transfert de session rapide, FST, sur une première combinaison de la bande 5 GHz et de la bande 60 GHz ou une deuxième combinaison de la bande 2,4 GHz et de la bande 60 GHz.
